# EUROPEAN PATENT APPLICATION

(11) **EP 4 769 256 A1**
(43) Date of publication of application: **01.07.2026**
(21) Application number: 25171517.3
(22) Date of filing: 20.04.2025
(51) Int. Cl.: G06Q 10/04, G06Q 30/0201

(54) **REALTIME NUMERICAL SOLUTION OF STOCHASTIC MODELS**

(30) Priority: 24.12.2024 EP 24223147
(71) Applicant: Signaloid Limited, Cambridgeshire CB1 2GE (GB)
(72) Inventor: Stanley-Marbell, Phillip, Cambridge, CB3 1BQ (GB)
(74) Representative: Legl, Stefan

(57) **Abstract**

The present disclosure relates to a computer-implemented method for price prediction, comprising:
- providing a stochastic model configured to predict future price information of a financial instrument; and
- executing the stochastic model in a single iteration having multiple steps by propagating a distribution of a price of the financial instrument through the multiple steps to predict the future price information of the financial instrument, wherein the distribution of the price indicates potential values of the price, and wherein each step of the multiple steps of the single iteration performs calculations on the distribution of the price.

## Description

### FIELD

The present disclosure relates to a computer-implemented method for price prediction, a computer program comprising instructions for carrying out the computer-implemented method for price prediction, a computer-readable storage medium comprising instructions for carrying out the computer-implemented method for price prediction, and a data processing system for price prediction. More particularly, the present disclosure relates to real-time numerical solution of stochastic differential equations for quantitative finance using distribution arithmetic.

### BACKGROUND

In financial markets, the ability to accurately estimate the future price of a financial instrument, such as equities (e.g., shares of companies) or commodities (e.g., the price per barrel of oil), is of great importance to financial institutions. Such predictions are integral to decision-making processes for investment strategies, risk management, and pricing financial derivatives.

Price movements in financial markets are influenced by numerous unpredictable factors, including news events, changes in market sentiment, and broader economic conditions. Consequently, future price estimation requires a probabilistic approach that accounts for the inherent randomness in these influences. To this end, mathematical models, specifically stochastic models, are widely employed to simulate the dynamics of price changes. These models often rely on stochastic differential equations (SDEs) to describe the evolution of a financial instrument's price over time.

Solving stochastic differential equations to predict future prices involves accounting for random market behaviors and fluctuations. A common approach is to perform multiple simulations of potential price trajectories by introducing slightly different random variations in each simulation. Each individual simulation produces a "path" that represents a possible evolution of the instrument's price over time. By running a large number of such paths and aggregating the results, it becomes possible to estimate the distribution and most likely outcomes for the future price of the financial instrument.

This simulation process is frequently implemented using Monte Carlo methods, which are well-suited for handling the random and iterative nature of stochastic models. Monte Carlo simulations involve generating hundreds of thousands, or even millions, of these price paths to ensure sufficient convergence on an accurate prediction. However, the computational demands of these repeated simulations are substantial, requiring significant processing time and resources.

### SUMMARY

In light of the above, a computer-implemented method for price prediction, a computer program comprising instructions for carrying out the computer-implemented method for price prediction, a computer-readable storage medium comprising instructions for carrying out the computer-implemented method for price prediction, and a data processing system for price prediction are provided.

It is an object of the present disclosure to enable price prediction with reduced processing time and resource consumption through the use of a dedicated processor that is able to operate and perform arithmetic directly on distribution representations. Another object of the present disclosure is to extend the capabilities of commonly used process architectures through the use of dedicated software that is able to operate and perform arithmetic directly on distribution representations.

The objects are solved by the features of the independent claims. Preferred embodiments are defined in the dependent claims.

According to an independent aspect of the present disclosure, a computer-implemented method for price prediction is provided. The method includes providing a stochastic model configured to predict future price information of a financial instrument; and executing the stochastic model in a single path having multiple steps by propagating a distribution of a price of the financial instrument through the multiple steps to predict the future price information of the financial instrument, wherein the distribution of the price indicates potential values (or changes) of the price, and wherein each step of the multiple steps of the single path performs calculations on the distribution of the price.

The term "financial instrument" as used throughout the present disclosure refers to an asset or contract that can be traded in financial markets and whose value (price) is subject to fluctuations over time. These instruments can be classified broadly into categories, each with distinct characteristics and risk profiles.

According to some embodiments, which can be combined with other embodiments described herein, the financial instrument is selected from the group including, or consisting of, equities, commodities, currencies, bonds and derivatives.

The term "stochastic model" as used throughout the present disclosure refers to a probabilistic framework designed to account for randomness and uncertainty in market movements. These stochastic models are based on the idea that price changes are not entirely deterministic but influenced by various unpredictable factors such as market sentiment, news, and macroeconomic conditions.

The stochastic model used in the embodiments of the present disclosure has multiple steps. This refers to a framework where the evolution of the price of the financial instrument is modeled as a sequence of calculations or simulations performed over discrete time intervals or steps. Each step represents a small increment of time in the progression of the model and incorporates the effects of deterministic trends and random fluctuations.

According to some embodiments, which can be combined with other embodiments described herein, the stochastic model is based on at least one stochastic differential equation. A stochastic differential equation (SDE) is a mathematical equation used to model the evolution of a system, such as the price of a stock or commodity, over time under the influence of both deterministic trends and random fluctuations. Specifically, SDEs describe how the price changes as a function of time, incorporating predictable factors like long-term growth or decay (drift) and unpredictable, random factors (volatility) arising from market noise or external events.

According to some embodiments, which can be combined with other embodiments described herein, the stochastic model is selected from the group consisting of a Geometric Brownian Motion Model, an Integrated Brownian Motion Model, a Correlated Brownian Motion Model, a Mean-Reverting Model, a Jump-Diffusion Model and a Stochastic Volatility Model.

According to some embodiments, which can be combined with other embodiments described herein, the distribution of the price which is propagated through the stochastic model to predict the future price information indicates potential values (or changes) of the price according to predictable factors and random factors.

Predictable factors refer to the components of the stochastic model that represent the systematic and relatively stable influences on a financial instrument's price over time. These factors can be derived from historical trends, economic indicators and/or inherent characteristics of the asset and can be modeled deterministically.

Random factors refer to the stochastic elements that introduce uncertainty and volatility into the price of a financial instrument. These factors arise from external events and/or market behaviors that are inherently random and cannot be forecast with certainty.

In the embodiments of the present disclosure, the stochastic model is executed in a single path (also referred to as "iteration"). According to some embodiments, which can be combined with other embodiments described herein, the single path is a single path at processor level. At the processor level, a single path (or iteration) refers to the execution of a single cycle or pass of a loop or operation in a computational program, as executed by the processor's hardware. This path involves, for example, the processor fetching instructions from memory, decoding them, performing arithmetic or logical operations, and then storing the results. In contrast thereto, at the computing level, a single path (or iteration) represents the completion of one entire cycle of a computational algorithm or simulation. This involves higher-level operations and may consist of multiple processor-level iterations working together to achieve a larger task. For example, a single path in a Monte Carlo Simulation could involve generating a random input, solving a stochastic differential equation, and recording the outcome as one path.

According to some embodiments, which can be combined with other embodiments described herein, the calculations on the distribution of the price are performed on a processor unit or processor architecture that is configured to represent and perform arithmetic on probability distributions.

According to some embodiments, which can be combined with other embodiments described herein, the distribution of the price of the financial instrument is in the form of a representation. The representation can be a representation of probability mass/density functions/distributions on which a processor unit or processor architecture can operate. In one embodiment, the representations enable commonly utilized processor architectures to operate on the distribution of the price of the financial instrument. Non-limiting exemplary methods for generating such representations from a data set are explained in WO 2022/248719 A1 and WO 2022/248714 A1.

According to some embodiments, which can be combined with other embodiments described herein, the representation includes price position parameters and associated price probability parameters. In particular, a representation generation algorithm can be used to generate the representation of the distribution of the price of the financial instrument. In preferred embodiments, the representation generation algorithm can be configured to generate the representation according to the position parameter and the probability parameter, wherein each position of the representation is represented by a Dirac delta associated with a corresponding probability mass (i.e., the price position and price probability parameters correspond to the position and probability parameters of a Dirac representation, respectively). In other words, each real number in the domain of a distribution may be described by a Dirac delta with some probability mass located at the value of the real number.

According to some embodiments, which can be combined with other embodiments described herein, the representation is a Telescoping Torques Representation (TTR). The Telescoping Torques Representation (TTR) builds on Dirac mixture representation and is based on the intuition that the mean value of a set of samples splits the samples into two sets with equal products of the distance of the sample from the mean and the sample probability. This allows the representation to capture the effects of unlikely, yet high-value samples even at small representation sizes.

According to some embodiments, which can be combined with other embodiments described herein, the calculations on the distribution of the price include, or are, arithmetic operations on the representation of the distribution of the price of the financial instrument.

According to some embodiments, which can be combined with other embodiments described herein, the arithmetic operation is selected from the group including, or consisting of, addition, subtraction, multiplication, division and exponentiation.

According to some embodiments, which can be combined with other embodiments described herein, the future price information obtained by executing the stochastic model is a distribution of the future price of the financial instrument. Accordingly, the output of the stochastic model is a distribution, particularly a probability distribution, rather than a single value.

According to some embodiments, which can be combined with other embodiments described herein, the method is deterministic, giving the same result each time. In contrast, Monte Carlo methods produce slightly different results with each execution due to their reliance on random sampling.

According to some embodiments, which can be combined with other embodiments described herein, the method provides at least 100% speed-up or at least 400% speed-up as compared with Monte Carlo simulations.

According to some embodiments, which can be combined with other embodiments described herein, the method operates without utilizing a Monte Carlo process.

According to another independent aspect of the present disclosure, a computer program is provided. The computer program has instructions which, when the program is executed by a computer, cause the computer to carry out the method for price prediction according to the embodiments described in this document.

According to another independent aspect of the present disclosure, a computer-readable storage medium is provided. The computer-readable storage medium has instructions which, when the program is executed by a computer, cause the computer to carry out the method for price prediction according to the embodiments described in this document.

Preferably, the computer-readable storage medium is a non-transitory computer-readable storage (or memory) medium. The term "non-transitory computer-readable storage (or memory) medium" includes, but is not limited to, magnetic or optical media, e.g., disks, hard drives, or DVDs/CD-ROMs, volatile or non-volatile media such as RAM (e.g., SDRAM, DDR, RDRAM, SRAM, etc.), ROM, etc. The non-transitory computer-readable storage (or memory) medium may include other types of non-transitory memory as well or combinations thereof.

According to another independent aspect of the present disclosure, a data processing system for price prediction is provided. The data processing system includes one or more processors configured to execute a stochastic model configured to predict future price information of a financial instrument in a single path having multiple steps by propagating a distribution of a price of the financial instrument through the multiple steps to predict the future price information of the financial instrument, wherein the distribution of the price indicates potential values (or changes) of the price, and wherein each step of the multiple steps of the single path performs calculations on the distribution of the price.

According to some embodiments, which can be combined with other embodiments described herein, the one or more processors of the data processing system are configured to perform the computer-implemented method for price prediction according to the embodiments described in this document.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: illustrates a schematic view of a conventional processor unit;
- FIG. 2: illustrates a schematic view of a processor unit according to embodiments of the present disclosure;
- FIG. 3: shows a flowchart of a method for price prediction according to embodiments of the present disclosure;
- FIG. 4: illustrates the construction of an uncertainty representation using Telescoping Torques Representation (TTR) according to embodiments of the present disclosure;
- FIG. 5: illustrates a bit-level layout of an uncertainty representation according to embodiments of the present disclosure;
- FIG. 6: illustrates a comparison between price predictions generated via a conventional Monte Carlo simulation approach and those obtained according to embodiments of the present disclosure;
- FIG. 7: illustrates another comparison between price predictions generated via a conventional Monte Carlo simulation and those obtained according to embodiments of the present disclosure; and
- FIG. 8: illustrates codes used in a Monte Carlo simulation and methods according to embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

As used herein, the term "uncertainty tracking" (or uncertainty propagation) is the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item.

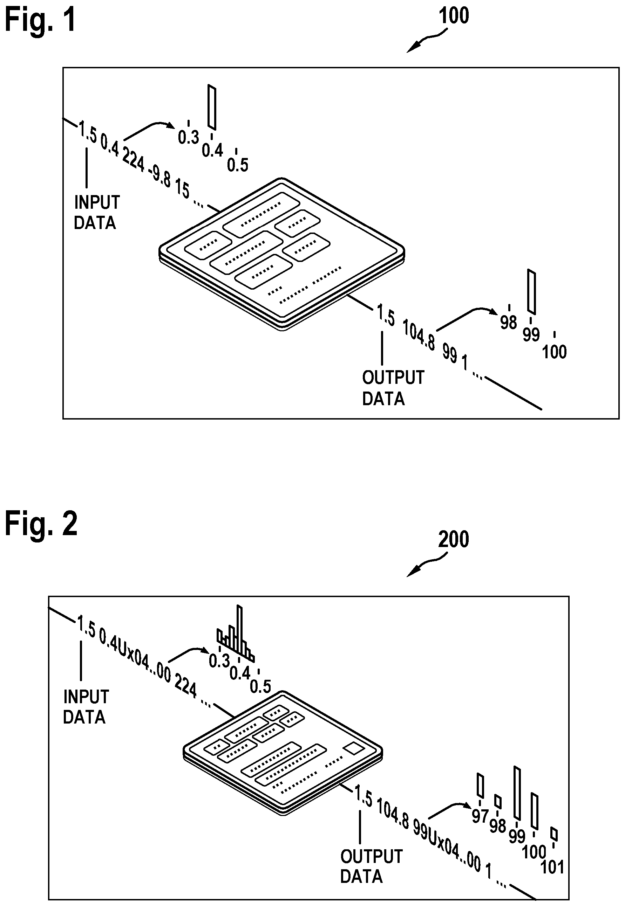

FIG. 1 illustrates a schematic view of a conventional processor unit 100.

A conventional processor unit 100 takes as input integer and floating-point values and performs operations (e.g., ADD, SUBSTRACT, MULTIPLY, XOR, etc.) on these data. The results of these operations are other integers or floating-point values.

Uncertainties in input data such as stock market data are not uncommon, but the conventional processor unit 100 can only deal with integer and floating-point values which are certain and unambiguous. Therefore, the software running over the conventional processor unit 100 eliminates the uncertainties e.g. by averaging the variations across readings into a single number or sampling from the input data, to get the data into a form that the conventional processor unit 100 can handle, before feeding the averaged data into subsequent steps.

However, in many cases, the accuracy of the processing result is critical. For example, the ability to accurately estimate the future price of a financial instrument, such as equities (e.g., shares of companies) or commodities (e.g., the price per barrel of oil), is of great importance to financial institutions. Such predictions are integral to decision-making processes for investment strategies, risk management, and pricing financial derivatives.

In such financial use cases, Monte Carlo methods can be employed, involving generating hundreds of thousands, or even millions, of these price paths to ensure sufficient convergence on an accurate prediction. However, the computational demands of these repeated simulations are substantial. In particular, repeating the calculations required for multiple potential paths of a financial instrument's price can be time-consuming, and completing these calculations within a practical timeframe is not always feasible. For example, when attempting to predict the price of a financial instrument one hour into the future, the calculation must be completed in under an hour to ensure the prediction remains actionable. At the same time, it is crucial that the calculation is not only fast but also accurate, striking a balance between computational efficiency and precision.

The embodiments of the present disclosure address the aforementioned drawback by representing each price of the financial instrument as a distribution and propagating this distribution through a stochastic model in a single path (or iteration), enabling uncertainty tracking of the price. This approach eliminates the need for repeated Monte Carlo simulations and effectively reduces the process to calculating a single "path". At each step along this path, the entire distribution of potential price movements, both upward and downward, is considered. This allows for prediction calculations that are not only faster but also more accurate, enabling users of financial models to make well-informed decisions and capitalize on accurately predicting future price movements.

In one exemplary embodiment of the present disclosure, the conventional processor unit 100 according to FIG. 1 can be extended without any hardware re-configuration using the concept of representation described later, particularly the so-called Telescoping Torques Representation (TTR). TTR enables the uncertainty tracking of the present disclosure on the conventional processor unit 100 without any hardware re-configuration.

FIG. 2 illustrates a schematic view of a processor unit 200 according to embodiments of the present disclosure, which is capable of processing and operating on a distribution of the price of a financial instrument. The processor unit 200 is a dedicated architecture, such as the architecture disclosed in WO 2022/248719 A1 operating on a representation according to WO 2022/248719 A1 and WO 2022/248714 A1.

The processor unit 200 of the present disclosure can take in as input the same kinds of integer and floating-point values and perform the same kinds of operations (e.g., ADD, SUBSTRACT, MULTIPLY, XOR, etc.) as the conventional processor unit. In addition to that, the values taken as input include additional information about distributions associated with each value, and the processor unit 200 may also, in some embodiments, enable a number of additional operations that act on the distribution information (e.g., BAYESLAPLACE, SAMPLEFROMDIST, etc.).

In some embodiments, the processor unit 200 includes additional and/or specifically configured hardware to enable the uncertainty tracking of the present disclosure. For example, the processor unit 200 may include a floating-point register file. The floating-point register file may include a first register file for storing particle data items and a second register file for storing distribution data. The distribution data represents distributions (e.g., TTR) that encode the uncertainty associated with the corresponding particle data items in the first register file.

A first arithmetic logic unit (ALU) can be configured to perform arithmetic operations on particle data items selected from the first register file, while a second arithmetic logic unit (ALU) can be configured to perform arithmetic operations on distribution data selected from the second register file. For example, the first arithmetic logic unit may execute an arithmetic operation (e.g., addition, subtraction, multiplication, or division) on two floating-point particle data items selected from the first register file and output the result. Simultaneously, the second arithmetic logic unit may execute the same arithmetic operation on two corresponding distribution data items selected from the second register file, which are associated with the particle data items used in the first arithmetic operation. The second arithmetic logic unit then outputs the result.

Notably, the arithmetic operation applied to the distribution data in the second register file is identical to the arithmetic operation applied to the particle data items in the first register file. Consequently, the output of the second arithmetic logic unit represents updated distributional data that quantifies the uncertainty associated with the result of the arithmetic operation performed on the particle data items.

A detailed description of an exemplary embodiment of the processor unit 200 is provided in WO 2022/248719 A1.

In some embodiments, the processor unit 200 of the present disclosure can be implemented as a virtualization layer. By moving the tracking of price uncertainty into a virtualization layer below the user's software, applications can be significantly simplified. Furthermore, the implementation of the processor unit 200 as a virtualization layer means users can benefit from advances in the technology as it evolves, without needing to rewrite the user's software.

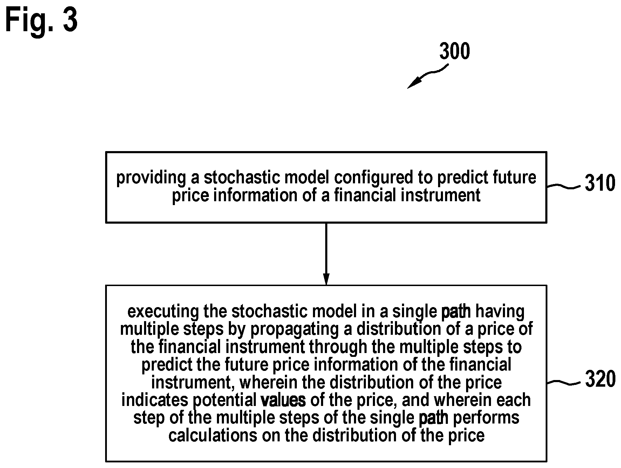

FIG. 3 shows a flowchart of a method 300 for price prediction according to embodiments of the present disclosure.

The method 300 includes providing a stochastic model configured to predict future price information of a financial instrument (block 310); and executing the stochastic model in a single path (or iteration) having multiple steps by propagating a distribution of a price of the financial instrument through the multiple steps to predict the future price information of the financial instrument, wherein the distribution of the price indicates potential values (or changes) of the price, and wherein each step of the multiple steps of the single path (or iteration) performs calculations on the distribution of the price (block 320).

In some embodiments, the financial instrument is selected from the group including, or consisting of, equities, commodities, currencies, bonds and derivatives. Equities represent shares of ownership in a company, granting shareholders a stake in the company's assets and earnings. Commodities refer to tangible goods such as oil, gold, or agricultural products, whose values are primarily influenced by fluctuations in supply and demand, along with geopolitical and economic factors. Currencies refer to the exchange rates between different monetary units, such as USD/EUR, representing the relative value of one currency compared to another. Bonds are fixed-income securities that represent a loan made by an investor to a borrower, typically a corporation or government, with their prices fluctuating based on changes in interest rates and overall market conditions. Derivatives are financial contracts, such as options and futures, whose value is derived from the performance of underlying assets, such as stocks, commodities, or indices.

The stochastic model used in the embodiments of the present disclosure has multiple steps. This refers to a framework where the evolution of the price of the financial instrument is modeled as a sequence of calculations or simulations performed over discrete time intervals or steps. Each step represents a small increment of time in the progression of the model and incorporates the effects of deterministic trends and random fluctuations.

In some embodiments, the stochastic model is based on at least one stochastic differential equation. A stochastic differential equation (SDE) is a mathematical equation used to model the evolution of a system, such as the price of a stock or commodity, over time under the influence of both deterministic trends and random fluctuations. Specifically, SDEs describe how the price changes as a function of time, incorporating predictable factors like long-term growth or decay (drift) and unpredictable, random factors (volatility) arising from market noise or external events.

In some embodiments, the stochastic model is selected from the group consisting of a Geometric Brownian Motion Model, an Integrated Brownian Motion Model, a Correlated Brownian Motion Model, a Mean-Reverting Model, a Jump-Diffusion Model and a Stochastic Volatility Model.

The Geometric Brownian Motion (GBM) Model describes prices as evolving continuously with a combination of predictable drift and random noise. The mathematical representation involves the price at a given time, the expected return (or drift), volatility (which measures the variation of returns), and a Wiener process representing the randomness. GBM assumes that percentage changes in prices are normally distributed and that prices grow exponentially over time.

The Integrated Brownian Motion (IBM) Model refers to the process obtained by taking the (deterministic) time-integral of a standard Brownian motion (also called a Wiener process), and is a continuous Gaussian process with zero mean.

The Correlated Brownian Motion (CBM) Model refers to a collection (or vector) of Brownian motions that exhibit specified correlation relationships among their components. In other words, instead of having each component of the vector be an independent Brownian motion, these components have a prescribed correlation structure.

The Mean-Reverting Model, such as the Ornstein-Uhlenbeck process, is particularly useful for assets that tend to oscillate around a historical average or equilibrium level. Here, the price dynamics include a term that pulls the price back toward the long-term mean, combined with a random noise component.

For scenarios where sudden, significant price changes occur - such as market crashes or major news events - Jump-Diffusion Models provide a more realistic representation by incorporating random jumps alongside the usual drift and volatility.

Stochastic Volatility Models allow the volatility itself to change over time. This is achieved by coupling the price process with another stochastic process that governs volatility. For instance, the Heston model is a widely used approach that captures the dynamic behavior of volatility and its impact on prices.

The distribution of the price which is propagated through the stochastic model to predict the future price information indicates potential values (or changes) of the price according to predictable factors and random factors. Predictable factors refer to the components of the stochastic model that represent the systematic and relatively stable influences on a financial instrument's price over time. These factors can be derived from historical trends, economic indicators and/or inherent characteristics of the asset and can be modeled deterministically. Random factors refer to the stochastic elements that introduce uncertainty and volatility into the price of a financial instrument. These factors arise from external events and/or market behaviors that are inherently random and cannot be forecast with certainty.

In the embodiments of the present disclosure, the stochastic model is executed in a single iteration. According to some embodiments, which can be combined with other embodiments described herein, the single iteration is a single iteration at processor level. At the processor level, a single iteration refers to the execution of a single cycle or pass of a loop or operation in a computational program, as executed by the processor's hardware. This iteration involves, for example, the processor fetching instructions from memory, decoding them, performing arithmetic or logical operations, and then storing the results. In contrast thereto, at the computing level, a single iteration represents the completion of one entire cycle of a computational algorithm or simulation. This involves higher-level operations and may consist of multiple processor-level iterations working together to achieve a larger task. For example, a single iteration in a Monte Carlo Simulation could involve generating a random input, solving a stochastic differential equation, and recording the outcome as one path.

In some embodiments, the future price information obtained by executing the stochastic model is a distribution of the future price of the financial instrument. Accordingly, the output of the stochastic model is a distribution, particularly a probability distribution, rather than a single value.

According to some embodiments, which can be combined with other embodiments described herein, the distribution of the price of the financial instrument which is propagated through the stochastic model is in the form of a representation. The representation can be a representation of probability mass/density functions/distributions on which the processor unit shown in FIG. 2 can operate.

The representations also enable commonly utilized processor architectures, such as the one shown in FIG. 1, to operate on the distribution of the price of the financial instrument. In the same way that each value of a floating-point register is an approximate representation of a real-valued number, a value in the representation is an approximation of an entire probability mass function.

A representation generation algorithm can be used to generate the representation of the distribution of the price of the financial instrument from a data set, such as stock market data. In some embodiments, two or more parameters can be used to construct the representation from the data set, i.e., a distribution of data items.

In preferred embodiments, the representation generation algorithm can be configured to generate the representation of the distribution of the price of the financial instrument according to a position parameter and a probability parameter, wherein each position of the representation is represented by a Dirac delta associated with a corresponding probability mass. In other words, each real number in the domain of a distribution may be described by a Dirac delta with some probability mass located at the value of the real number.

It should be noted that this representation of a distribution in terms of Dirac deltas within its domain is different from that of a probability mass function (PMF), where the domain of the distribution is by definition discrete-valued and integrals can be replaced with sums. Because the Dirac delta distribution is not a function but rather is a distribution, the representation of distributions as a collection of Dirac deltas is also different from the concept of a probability density function (PDF). In general, one can call a representation made up of Dirac deltas that integrate to 1.0 (i.e., their probability masses sum up to 1.0) as probability density distribution (PDD) which is a generalization of a probability density function (PDF) (i.e., a PDF is a PDD but not vice versa).

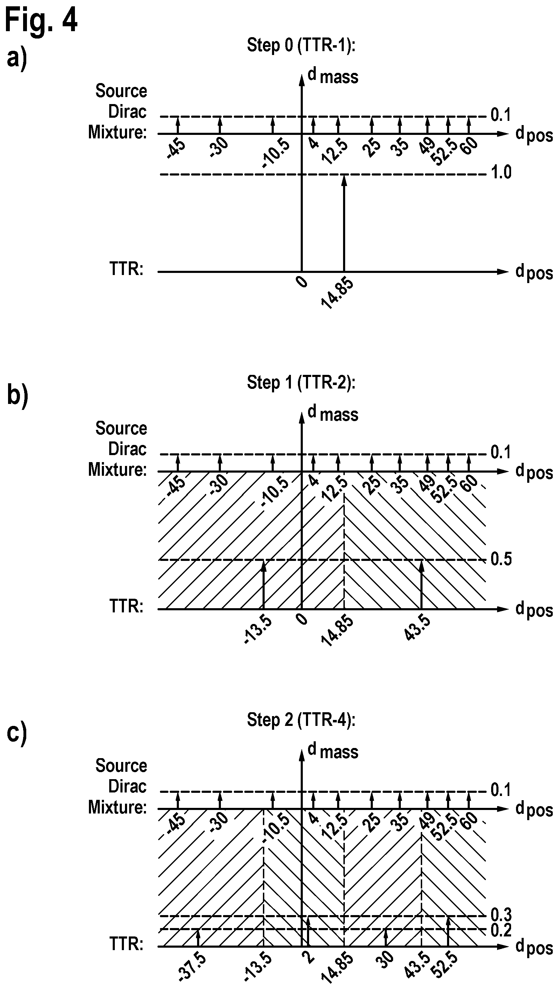

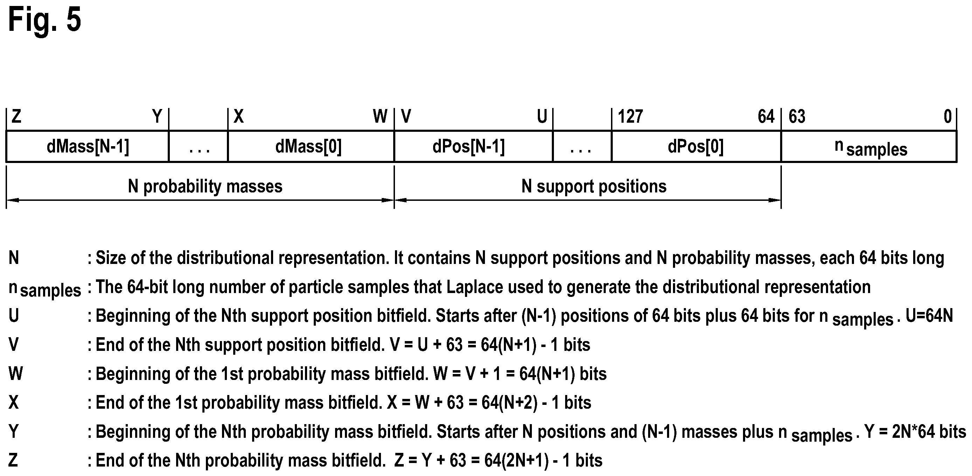

The so-called Telescoping Torques Representation (TTR) of preferred embodiments of the present disclosure is described below with reference to FIGs. 4 and 5 as an example of an uncertainty representation of a distribution in terms of Dirac deltas. The Telescoping Torques Representation is described in detail in WO 2022/248719 A1 and WO 2022/248714 A1. It is to be understood that the present disclosure is not limited thereto and that other methods may also be used to construct representations, such as Moment-Quantized Histogram Representation (MQHR) described in WO 2022/248714 A1.

The Telescoping Torques Representation (TTR) builds on Dirac mixture representation of a set of samples of a data set, and is based on the intuition that the mean value of a set of samples splits the samples into two sets with equal products of the distance of the sample from the mean and the sample probability. This allows the representation to capture the effects of unlikely, yet high-value samples even at small representation sizes.

Let *src_{DM}* be a Dirac delta mixture representing a set of samples from a random variable *X.* Let *N* be a positive integer power of two. *src_{DM}* is converted to a distribution representation of size *N* using a recursive conversion algorithm of *log₂ N* steps. The number of steps is what is referred to as the "order" of the distribution representation. At each step, the algorithm splits a source Dirac mixture on its mean value *m*, creating two Dirac mixtures, which are the inputs of two new calls to the algorithm.

FIG. 4 illustrates an example for *N =* 4, starting from a *src_{DM}* of 10 data samples (e.g., particles). The top part of FIG. 4 illustrates the source Dirac mixture. The mixture consists of 10 Dirac deltas, each one positioned at the value of each unique source sample. The mass of each Dirac delta is 0.1, equal to the relative frequency of each data sample (e.g., particle).

In step 0 of FIG. 4(a), the conversion algorithm creates the zeroth-order distribution representation of *src_{DM},* which is a single Dirac delta located at the mean (*m =* 14.85) of *src_{DM}* (i.e., *dₚₒₛ*[0] *=* 14.85) with probability mass equal to the sum of the probability masses of all Dirac deltas in *src_{DM}* (*dₘₐₛₛ*[0] *=* 1.0).

In step 1 of FIG. 4(b), the conversion algorithm splits *src_{DM}* into two mixtures (each with five Dirac deltas in this example) using *m* as a boundary, and repeats the process for each sub-mixtures. FIG. 4(b) illustrates the first-order distribution representation of *src_{DM},* which has two Dirac deltas positioned at the mean value of the Dirac mixture splits of step 0, each one with probability mass equal to 0.5.

In step 2 of FIG. 4(c), the conversion process repeats, further splitting the sub-mixtures of step 1, into two parts. This results in four sub-mixtures and four Dirac deltas that represent them and form the second-order distribution representation of *src_{DM}.* FIG. 4(c) illustrates that the split in step 1 results in sub-mixtures that each contain a different number of source particle samples. Step 2 represents these sub-mixtures with Dirac deltas with unequal probability masses. FIG. 4(c) illustrates that the outcome Dirac deltas retain the property of equal probability torque on the two sides of the mean value of the source Dirac mixture (*m* = 14.85).

A Dirac mixture requires only a series of positions *xᵢ* and probability masses *pᵢ* for its description. In the embodiments of the present disclosure, price position and price probability may correspond to these position and probability masses of the Dirac representation, respectively. It should be noted that the terms "position" and "support position" can be used interchangeably in this context. For a random variable d, its Dirac mixture of size *N* is an array of 2*N* floating-point values. For the ith Dirac delta of the mixture, the position *dₚₒₛ*[i] and probability mass *dₘₐₛₛ*[i] are stored.

FIG. 5 illustrates a one bit-level layout for such a Dirac mixture. The set of bits in the layout allow a concise in-processor representation for the distribution of the price of the financial instrument.

The above sum-of-Dirac-deltas representation may be described in the form of a set of tuples (i.e., a set of *n* k-tuples). A reference herein to a "tuple" may be considered to include a reference to a data structure consisting of multiple parts defining an ordered set of data constituting a record, as is commonly understood in the art. In mathematics, a tuple is a finite sequence of elements such as a sequence of *k* elements, where *k* is a positive integer (e.g., *k=2).*

In a preferred embodiment of the present disclosure, each tuple of the set of tuples is a real or integer value (i.e., the position parameter) paired with a probability (i.e., the probability mass, which is a real number between 0 and 1), and the probabilities in the set of tuples add up to 1. Accordingly, each tuple provides a data structure within which distributional information is encoded. These tuples are distinct from the probability distribution itself.

Tuples other than those described above may be used in further embodiments. For example, (*m+* 1)-tuples could be defined where the first *m* numbers tell the m-dimensional position of a Dirac delta, and the last number is the probability mass of the Dirac delta.

The present disclosure is not limited to the above sum-of-Dirac-deltas representation, and other representations can be constructed from the real-world data set. Another example of such an uncertainty representation is an interval-based representation (i.e., a piecewise constant approximation of the probability density function, which is equivalent to the linear approximation of the CDF) having n intervals and k = 3 (start of interval, end of interval, density value).

Yet another example is a mixture of these, e.g., consider a distribution density with half of its mass in a uniform [0, 1] (thus, exactly represented by the 3-tuple (0, 1, 0.5)) and the other half is degenerate at the value 2 (thus, exactly represented by the 2-tuple (2, 0.5)). A degenerate distribution can be understood as a probability distribution that has a non-trivial probability mass (i.e., greater than 0) concentrated in a lower dimensional manifold than the dimension of the range of the corresponding random variable (a.k.a., the domain of the distribution). In particular, any 1-dimensional PDD that contains a Dirac delta with probability mass greater than 0 is a degenerate distribution (which has nontrivial mass concentrated at a point, a 0-dimensional manifold).

The representations described above make it unnecessary to generate large numbers of samples in order to sample the tails of a distribution (i.e., to converge) in the terminology of Monte Carlo methods. In particular, the representation (and subsequent computation using it) makes irrelevant the whole idea of having to keep running Monte Carlo iterations until one has sampled far enough out into the tails (of the inputs as well as of the results).

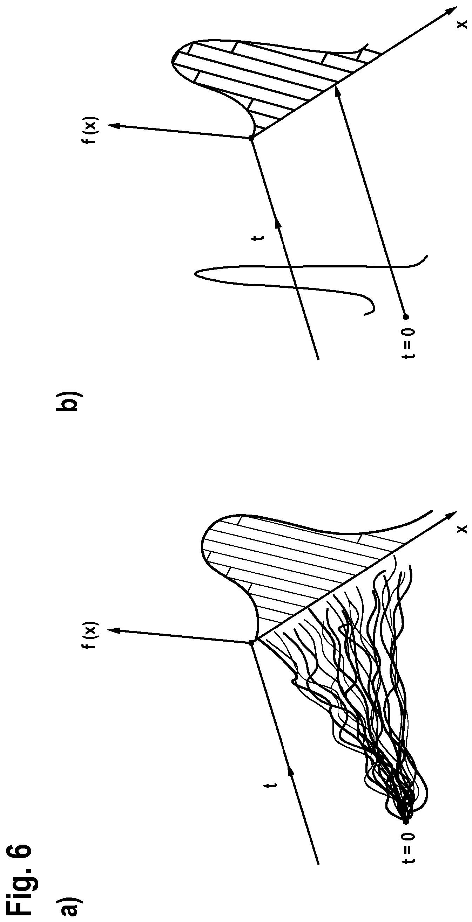

FIG. 6 illustrates a comparison between price predictions generated via a conventional Monte Carlo simulation approach (FIG. 6(a)) and those obtained according to embodiments of the present disclosure (FIG. 6(b)).

The Monte Carlo simulation involves generating hundreds of thousands, or even millions, of price paths over time t to ensure sufficient convergence on an accurate prediction. However, the computational demands of these repeated simulations are substantial. In particular, repeating the calculations required for multiple potential paths of a financial instrument's price can be time-consuming, and completing these calculations within a practical timeframe is not always feasible. For example, when attempting to predict the price of a financial instrument one hour into the future, the calculation must be completed in under an hour to ensure the prediction remains actionable. At the same time, it is crucial that the calculation is not only fast but also accurate, striking a balance between computational efficiency and precision.

The embodiments of the present disclosure address the aforementioned drawback by representing each price of the financial instrument as a distribution and propagating this distribution through a stochastic model in a single path, enabling uncertainty tracking of the price. This approach eliminates the need for repeated Monte Carlo simulations and effectively reduces the process to calculating a single "path", as shown in FIG. 6(b). At each step along this path, the entire distribution of potential price movements, both upward and downward, is considered. This allows for prediction calculations that are not only faster but also more accurate, enabling users of financial models to make well-informed decisions and capitalize on accurately predicting future price movements.

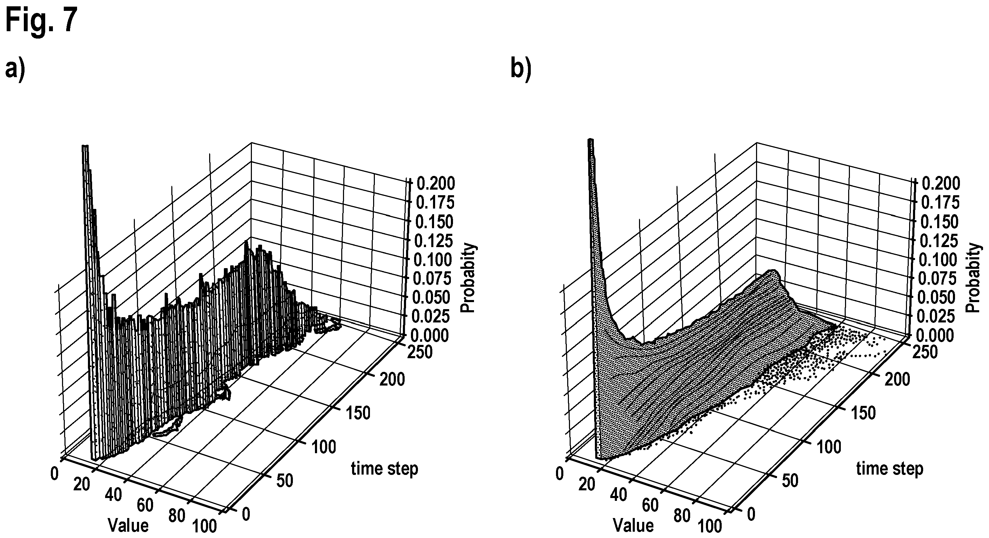

FIG. 7 illustrates a comparison between price predictions generated via a conventional Monte Carlo simulation approach (FIG. 7(a)) and those obtained according to embodiments of the present disclosure (FIG. 7(b)).

The traditional Monte Carlo-based path simulation is slower and requires hundreds of thousands of paths to reach convergence. The one-pass execution using distributions is faster and achieves more accurate results than the traditional Monte Carlo-based path simulation.

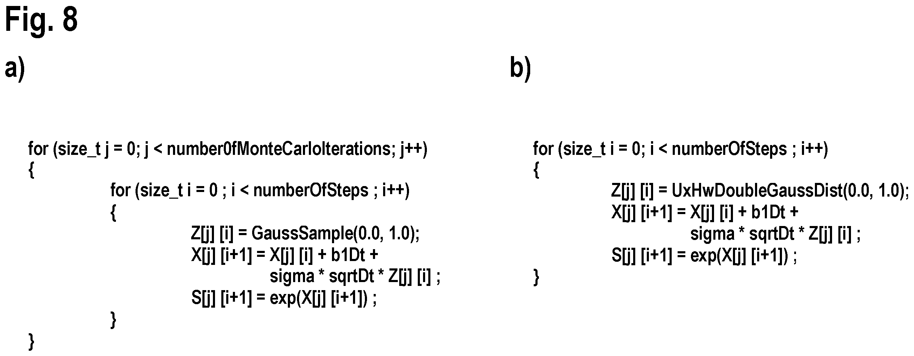

FIG. 8 illustrates codes used in a Monte Carlo simulation (FIG. 8(a)) and methods according to embodiments of the present disclosure (FIG. 8(b)). It is clear from the exemplary code snippet in FIG. 8(b) that, with the embodiments of the present disclosure, the outer loop requiring to iterate the algorithmic steps of the finance models through each output provided by each Monte-Carlo simulation is deleted and replaced by a single computation path for each algorithmic step.

Although the code in FIG. 8(b) employs a particular representation, the choice of which representation to implement can vary based on the desired balance between distribution accuracy and computational speed.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A computer-implemented method for price prediction, comprising:
- providing a stochastic model configured to predict future price information of a financial instrument; and
- executing the stochastic model in a single path having multiple steps by propagating a distribution of a price of the financial instrument through the multiple steps to predict the future price information of the financial instrument, wherein the distribution of the price indicates potential values of the price, and wherein each step of the multiple steps of the single path performs calculations on the distribution of the price.

2. A computer-implemented method of claim 1, wherein:
- the stochastic model is based on at least one stochastic differential equation; and/or
- the stochastic model is selected from the group consisting of a Geometric Brownian Motion Model, an Integrated Brownian Motion Model, a Correlated Brownian Motion Model, a Mean-Reverting Model, a Jump-Diffusion Model and a Stochastic Volatility Model.

3. A computer-implemented method of claim 1 or 2, wherein the distribution of the price indicates potential values of the price according to predictable factors and random factors.

4. A computer-implemented method of any one of claims 1 to 3, wherein the single path is a single path at processor level.

5. A computer-implemented method of any one of claims 1 to 4, wherein the calculations on the distribution of the price are performed on a processor architecture that is configured to represent and perform arithmetic on probability distributions.

6. A computer-implemented method of any one of claims 1 to 5, wherein the distribution of the price of the financial instrument is in the form of a representation, in particular wherein the representation includes price position parameters and associated price probability parameters.

7. A computer-implemented method of claim 6, wherein the representation is in the form of a sum of Dirac deltas.

8. A computer-implemented method of claim 6 or 7, wherein the representation is a Telescoping Torques Representation.

9. A computer-implemented method of any one of claims 7 to 8, wherein the calculations on the distribution of the price include, or are, arithmetic operations on the representation of the distribution of the price of the financial instrument.

10. A computer-implemented method of claim 9, wherein the arithmetic operations are selected from the group consisting of addition, subtraction, multiplication, division and exponentiation.

11. A computer-implemented method of any one of claims 1 to 10, wherein the future price information obtained by executing the stochastic model is a distribution of the future price of the financial instrument.

12. A computer-implemented method of any one of claims 1 to 11, wherein:
- the method is deterministic, giving the same result each time; and/or
- the method provides at least 100% speed-up or at least 400% speed-up as compared with Monte Carlo simulations.

13. A computer program comprising instructions which, when the program is executed by a computer, cause the computer to carry out the method of any one of claims 1 to 12.

14. A computer-readable storage medium comprising instructions which, when the program is executed by a computer, cause the computer to carry out the method of any one of claims 1 to 12.

15. A data processing system for price prediction, comprising one or more processors configured to:
- execute a stochastic model configured to predict future price information of a financial instrument in a single path having multiple steps by propagating a distribution of a price of the financial instrument through the multiple steps to predict the future price information of the financial instrument, wherein the distribution of the price indicates potential values of the price, and wherein each step of the multiple steps of the single path performs calculations on the distribution of the price.
